# EUROPEAN PATENT APPLICATION

(11) **EP 4 614 715 A1**
(43) Date of publication of application: **10.09.2025**
(21) Application number: 23885134.9
(22) Date of filing: 06.11.2023
(51) Int. Cl.: H01M 50/536, H01M 10/058

(54) **COLUMNAR BATTERY AND ELECTRICAL DEVICE COMPRISING COLUMNAR BATTERY**

(30) Priority: 04.11.2022 CN 202211379212
(71) Applicant: Xiamen Ampack Technology Limited, Xiamen City, Fujian Province, 361000 (CN)
(72) Inventor: HUANG, Jimin, Xiamen, Fujian 361000 (CN); ZHANG, Qingwen, Xiamen, Fujian 361000 (CN); DAI, Zhifang, Xiamen, Fujian 361000 (CN)
(74) Representative: Icosa
(86) International application number: PCT/CN2023/129863
(87) International publication number: WO 2024/094210

(57) **Abstract**

A cylindrical battery and an electric apparatus are disclosed, including an electrode assembly. The electrode assembly includes a positive electrode plate, a separator, and a negative electrode plate stacked and wound together. The positive electrode plate includes a positive current collector. The positive current collector has a first surface provided with an active material layer, an insulation layer, and an uncoated foil area arranged in order along an axial direction of the cylindrical battery. The electrode assembly further includes a flattened part, the flattened part being formed by bending and overlapping the uncoated foil area towards a central axis of winding of the electrode assembly and having a flattened surface. The insulation layer provides support for the positive current collector, preventing a short circuit caused by the flattened part folding over to exceed the separator and contact the negative electrode plate.

## Description

This application claims priority to Patent Application No. 202211379212.6 filed with the China National Intellectual Property Administration on November 4, 2022 and entitled "CYLINDRICAL BATTERY AND ELECTRIC APPARATUS INCLUDING CYLINDRICAL BATTERY", which is incorporated herein by reference in its entirety.

### TECHNICAL FIELD

This application relates to the field of energy storage apparatuses, and in particular, to a cylindrical battery and an electric apparatus including a cylindrical battery.

### BACKGROUND

In the production process of full-tab batteries (such as cylindrical batteries), a tab flattening process is required. The tab flattening process involves pressing down the originally upright tabs to make them contact each other, enhancing the current collection. Moreover, the flattened tabs lie in the same plane, facilitating subsequent welding work of the current collection plate. However, in existing full-tab batteries, the positive electrode tabs tend to fold over and contact the negative electrode active layer after flattening, causing a short circuit.

### SUMMARY

An objective of this application is to provide a cylindrical battery and an electric apparatus including such cylindrical battery, so as to reduce a risk of short circuits.

A first aspect of this application provides a cylindrical battery including an electrode assembly. The electrode assembly includes a positive electrode plate, a separator, and a negative electrode plate stacked and wound together. The positive electrode plate includes a positive current collector. The positive current collector has a first surface provided with an active material layer, an insulation layer, and an uncoated foil area arranged in order along an axial direction of the cylindrical battery. The electrode assembly further includes a flattened part, the flattened part being formed by bending and overlapping the uncoated foil area towards a central axis of winding of the electrode assembly and having a flattened surface.

The cylindrical battery provided in this application having the insulation layer enhances hardness of the positive current collector on a part where the insulation layer is disposed. The insulation layer provides support for the positive current collector on the part, preventing a short circuit caused by the flattened part folding over to exceed the separator and contact the negative electrode plate.

According to some embodiments of this application, along the axial direction of the cylindrical battery, a height L of the flattened part is 0.2 mm to 4 mm. When the height L of the flattened part is less than 0.2 mm, a stacked area of the flattened part is severely compressing the insulation layer and may cause the insulation layer to rupture. As a result, the insulation layer cannot support and protect well the positive current collector. When the height L of the flattened part is greater than 4 mm, the uncoated foil area is barely flattened, and thus the uncoated foil area that is flattened (the flattened part) is prone to rebound up.

According to some embodiments of this application, along the axial direction of the cylindrical battery, a height W of the insulation layer is 1 mm to 5 mm. When the height W of the insulation layer is less than 1 mm, the insulation layer is too narrow (the height is too small). In this case, application of the insulation layer may be incomplete due to unstable capability of a coating process, and thus the insulation layer cannot support and protect well the positive current collector. Moreover, a larger height W of the insulation layer indicates higher energy density loss for the cylindrical battery.

According to some embodiments of this application, the height W of the insulation layer is 1.5 mm to 5 mm. In this way, sufficient support strength provided by the insulation layer for the positive current collector can be guaranteed while guaranteeing stable capability of the insulation layer coating process.

According to some embodiments of this application, the insulation layer has a thickness h, and the active material layer has a thickness H, where 0.1H≤h≤H. When h<0.1H, the insulation layer is too thin. In this case, application of the insulation layer may be incomplete due to unstable capability of the coating process, and thus the insulation layer cannot support and protect well the positive current collector.

According to some embodiments of this application, 0.2H≤h≤0.9H. As a result, sufficient support strength provided by the insulation layer for the positive current collector can be guaranteed while guaranteeing stable capability of the insulation layer coating process. When h>0.9H, the insulation layer is too thick. In this case, because the insulation layer has certain hardness and brittleness, it may rupture under a flattening stress, and thus cannot support and protect well the positive current collector.

According to some embodiments of this application, H is 50 µm to 100 µm.

According to some embodiments of this application, the positive current collector further includes a second surface opposite to the first surface, and the active material layer, the insulation layer, and the uncoated foil area are also arranged on the second surface.

According to some embodiments of this application, the insulation layer includes inorganic particles, the inorganic particles including at least one of aluminum oxide, zinc oxide, calcium oxide, silicon dioxide, zirconium oxide, magnesium oxide, titanium oxide, hafnium dioxide, tin oxide, cerium dioxide, nickel oxide, yttrium oxide, silicon carbide, alumina hydroxide, magnesium hydroxide, calcium hydroxide, barium sulfate, or boehmite.

A second aspect of this application further provides an electric apparatus including the cylindrical battery described above.

### BRIEF DESCRIPTION OF DRAWINGS

The above and/or additional aspects and advantages of this application will become obvious and easy to understand from the description of the embodiments with reference to the following drawings.
FIG. 1 is a schematic diagram of a cylindrical battery provided in an embodiment of this application;
FIG. 2 is a cross-sectional view of the cylindrical battery in FIG. 1 along II-II;
FIG. 3 is a schematic diagram of an expanded electrode assembly provided in an embodiment of this application;
FIG. 4 is a cross-sectional view of a positive electrode plate provided in an embodiment of this application; and
FIG. 5 is a cross-sectional view of a positive electrode plate provided in another embodiment of this application.

Cylindrical battery 100
Electrode assembly 10
Positive electrode plate 20
Negative electrode plate 30
Separator 40
Positive current collector 21
Active material layer 22
Insulation layer 23
First surface 21a
Second surface 21b
Uncoated foil area 24, 31a
Flattened part 101
Flattened surface 102
First end 211
Second end 212
Negative current collector 31
Negative electrode active material layer 32

### DESCRIPTION OF EMBODIMENTS

The following clearly describes technical solutions in some embodiments of this application in detail. Apparently, the described embodiments are some rather than all of the embodiments of this application. Unless otherwise defined, all technical and scientific terms used herein shall have the same meanings as commonly understood by those skilled in the art to which this application relates. The terms used herein are intended to merely describe specific embodiments rather than to limit this application.

The following describes some embodiments of this application in detail. However, this application may be embodied in many different implementations and should not be construed as being limited to the example embodiments set forth herein. Rather, these example embodiments are provided so that this application can be conveyed to those skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A may be directly connected to the element B or an intervening element C may be present therebetween such that the element A and the element B are indirectly connected to each other.

Further, the use of "may" when describing some embodiments of this application relates to "one or more embodiments of this application."

The terminology used herein is merely intended to describe specific embodiments rather than to limit this application. As used herein, the singular forms are intended to include the plural forms as well, unless the context clearly indicates otherwise. It should be further understood that the terms "comprise" or "include" and variations thereof, when used in this specification, specify the presence of stated features, numbers, steps, operations, elements, and/or components but do not preclude the presence or addition of one or more other features, numbers, steps, operations, elements, components, and/or groups thereof.

Spatial related terms such as "above" may be used herein for ease of description to describe the relationship between one element or feature and another element (a plurality of elements) or feature (a plurality of features) as illustrated in the figures. It should be understood that the spatial terms are intended to encompass different orientations of a device or an apparatus in use or operation in addition to the orientations depicted in the figures. For example, if a device in a figure is turned over, elements described as "over" or "above" other elements or features would then be oriented "beneath" or "below" the other elements or features. Thus, the example term "above" may include both orientations of above and below. It should be understood that although the terms first, second, third, or the like may be used herein to describe various elements, components, areas, layers, and/or parts, these elements, components, areas, layers, and/or parts should not be limited by these terms. These terms are used to distinguish one element, component, area, layer, or parts from another element, component, area, layer, or part. Therefore, a first element, component, area, layer, or part discussed below may be referred to as a second element, component, area, layer, or part without departing from the teachings of the example embodiments.

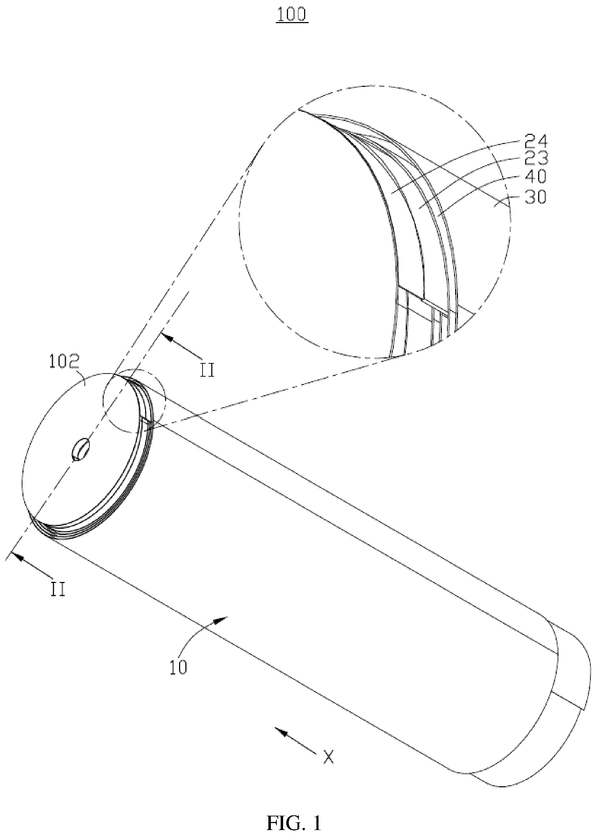

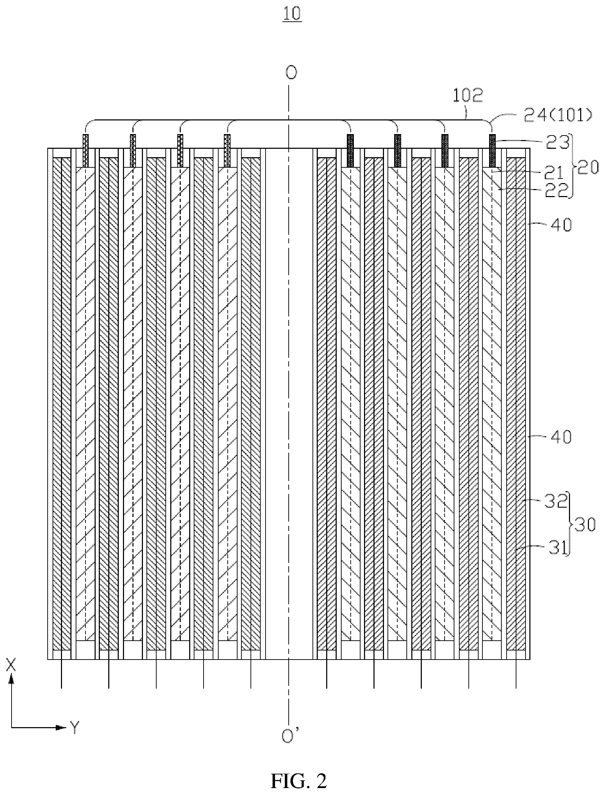

Referring to FIGs. 1 and 2, an embodiment of this application provides a cylindrical battery 100 including an electrode assembly 10 and a housing (not shown). The housing is approximately columnar in shape, for example, cylindrical, elliptic-cylindrical, square-cylindrical, and the like. The electrode assembly 10 is accommodated in the housing and has a shape fitting the housing. For example, the electrode assembly 10 may be cylindrical, elliptic-cylindrical, or square-cylindrical. The housing is made of a conductive material, such as a metal material. The electrode assembly 10 includes a positive electrode plate 20, a negative electrode plate 30, and a separator 40 configured between the positive electrode plate 20 and the negative electrode plate 30. In the electrode assembly 10, the positive electrode plate 20, the separator 40, and the negative electrode plate 30 are stacked and wound together. That is, the electrode assembly 10 is formed by stacking the positive electrode plate 20, the separator 40, and the negative electrode plate 30 in order and then winding them.

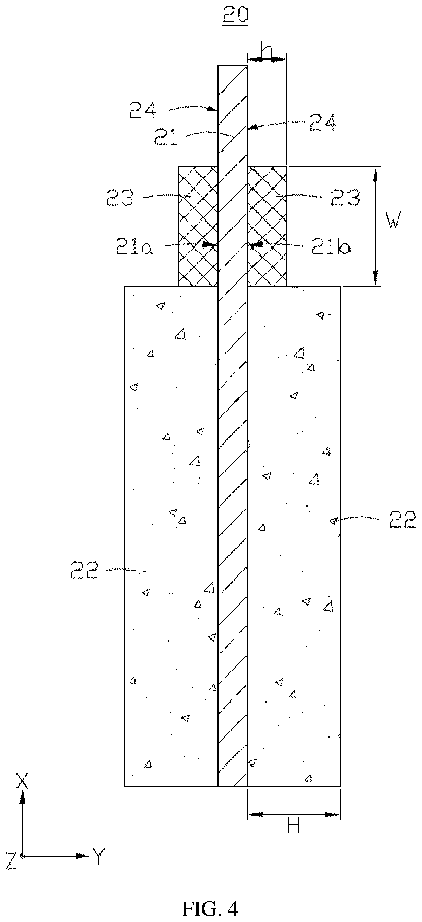

Referring to FIGs. 2 and 4, the positive electrode plate 20 includes a positive current collector 21, an active material layer 22, and an insulation layer 23, where the active material layer 22 and the insulation layer 23 are arranged on the positive current collector 21. The positive current collector 21 includes a first surface 21a and a second surface 21b arranged opposite to each other. The active material layer 22 and the insulation layer 23 are arranged on the first surface 21a. The first surface 21a includes an uncoated foil area 24 not covered by the active material layer 22 or the insulation layer 23. The uncoated foil area 24 is a part of the positive current collector 21 and is used as a positive electrode tab. The active material layer 22, the insulation layer 23, and the uncoated foil area 24 are arranged in order on the first surface 21a along an axial direction X of the cylindrical battery 100, and the insulation layer 23 connects the active material layer 22 to the uncoated foil area 24.

The active material layer 22, the insulation layer 23, and the uncoated foil area 24 are also arranged on the second surface 21b. The active material layer 22, the insulation layer 23, and the uncoated foil area 24 on the second surface 21b are arranged in order along the axial direction X of the cylindrical battery 100, and the insulation layer 23 connects the active material layer 22 to the uncoated foil area 24. The positions of the active material layer 22, the insulation layer 23, and the uncoated foil area 24 on the first surface 21a may correspond to the positions of the active material layer 22, the insulation layer 23, and the uncoated foil area 24 on the second surface 21b, respectively. The positions are not limited by this application. In other embodiments, the active material layer 22, the insulation layer 23, and the uncoated foil area 24 may be arranged only on the first surface 21a or the second surface 21b.

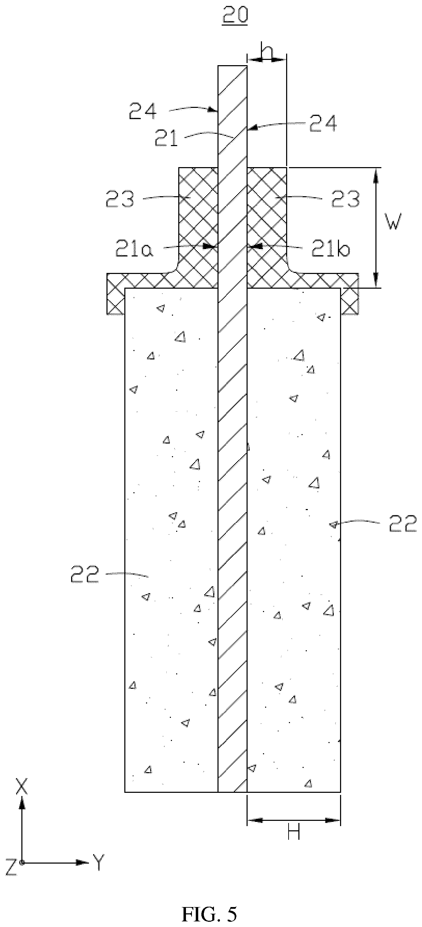

On the first surface 21a or the second surface 21b, the insulation layer 23 and the active material layer 22 are touching each other. That is, along the axial direction X of the cylindrical battery 100, an edge of the insulation layer 23 is in contact with an edge of the active material layer 22. Referring to FIG. 5, in other embodiments, the insulation layer 23 on the first surface 21a or the second surface 21b may partially cover the active material layer 22 and connects to the active material layer 22. That is, along a thickness direction Y of the electrode assembly 10, the insulation layer 23 partially overlaps the active material layer 22. The axial direction X of the cylindrical battery 100 is perpendicular to the thickness direction Y.

A material of the positive current collector 21 includes at least one of Ni, Ti, Cu, Ag, Au, Pt, Fe, Al, or combinations thereof. The active material layer 22 may include at least one of lithium cobalt oxide, lithium manganate oxide, lithium nickel oxide, lithium nickel cobalt manganate oxide, lithium iron phosphate, lithium manganese iron phosphate, lithium vanadium phosphate, lithium vanadium oxide phosphate, lithium-rich manganese-based material, lithium nickel cobalt aluminum oxide, or combinations thereof.

Referring to FIGs. 1 and 2, the electrode assembly 10 further includes a flattened part 101. The flattened part 101 is formed through a flattening process performed on the uncoated foil area 24, that is, by bending the uncoated foil area 24 towards a central axis OO' of winding of the electrode assembly 10. The flattened part 101 is formed by bending and overlapping the uncoated foil area 24 towards the central axis of winding of the electrode assembly 10 and has a flattened surface 102. The flattened surface 102 of the flattened part 101 is formed at an end of the axial direction X of the cylindrical battery 100. The flattened surface 102 is approximately a flat surface and is configured to connect a current collector plate (not shown). It should be noted that the "flat surface" in this application indicates not only a completely flat surface, but also a surface that is uneven or rough to the extent that the uncoated foil area 24 and the current collector plate can be joined.

The insulation layer 23 provided in this application enhances hardness of the positive current collector 21 on a part where the insulation layer 23 is disposed. The insulation layer 23 provides support for the positive current collector 21 on the part, preventing a short circuit caused by the flattened part 101 folding over to exceed the separator 40 and contact the negative electrode plate 30.

In some embodiments, the insulation layer 23 includes inorganic particles and a binder, the inorganic particles including at least one of aluminum oxide, zinc oxide, calcium oxide, silicon dioxide, zirconium oxide, magnesium oxide, titanium oxide, hafnium dioxide, tin oxide, cerium dioxide, nickel oxide, yttrium oxide, silicon carbide, alumina hydroxide, magnesium hydroxide, calcium hydroxide, barium sulfate, or boehmite. The binder is selected from at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polymethyl methacrylate, polytetrafluoroethylene, or polyhexafluoropropylene. Presence of the inorganic particles enhances the hardness of the insulation layer 23, thereby improving the support effect for the flattened part 101.

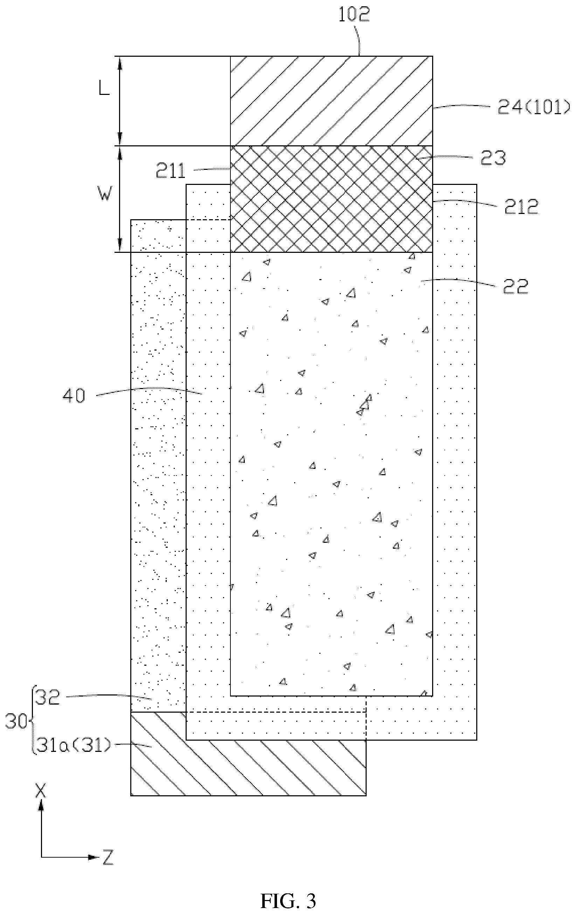

Referring to FIG. 3, along the axial direction X of the cylindrical battery 100, a height of the flattened part 101 is L. In some embodiments, L is 0.2 mm to 4 mm. When L is less than 0.2 mm, a stacked area of the flattened part 101 is severely compressing the insulation layer 23 and may cause the insulation layer 23 to rupture. As a result, the insulation layer 23 cannot support and protect well the positive current collector 21. When L is greater than 4 mm, the uncoated foil area 24 is barely flattened, and thus the uncoated foil area 24 that is flattened (the flattened part 101) is prone to rebound up. Moreover, the larger L is, the more the cylindrical battery 100 loses energy density. For example, when the cylindrical battery 100 has a height of 70 mm, the energy density decreases by 5.4% when L=4 mm compared to when L=0.2 mm.

Referring to FIGs. 3 and 4, along the axial direction X of the cylindrical battery 100, a height of the insulation layer 23 on the first surface 21a or the second surface 21b is W. In some embodiments, W is 1 mm to 5 mm. When W is less than 1 mm, the insulation layer 23 is too narrow (the height is too small). In this case, application of the insulation layer 23 may be incomplete due to unstable capability of a coating process, and thus the insulation layer 23 cannot support and protect well the positive current collector 21. Moreover, the larger W is, the more the cylindrical battery 100 loses energy density. For example, when the height of the cylindrical battery 100 is 70 mm, the energy density decreases by 5.7% when W=5 mm compared to when W=1 mm.

In some embodiments, W is 1.5 mm to 5 mm. As a result, sufficient support strength provided by the insulation layer 23 for the positive current collector 21 can be guaranteed while guaranteeing stable capability of the coating process for the insulation layer 23.

Referring to FIG. 4, along the thickness direction Y of the electrode assembly 10, a thickness of the insulation layer 23 on the first surface 21a or the second surface 21b is h, and a thickness of the active material layer on the first surface 21a or the second surface 21b is H. In some embodiments, 0.1H≤h≤H. When h<0.1H, the insulation layer 23 is too thin. In this case, application of the insulation layer 23 may be incomplete due to unstable capability of the coating process, and thus the insulation layer 23 cannot support and protect well the positive current collector 21.

In some embodiments, 0.2H≤h≤0.9H. As a result, sufficient support strength provided by the insulation layer 23 for the positive current collector 21 can be guaranteed while guaranteeing stable capability of the coating process for the insulation layer 23. When h>0.9H, the insulation layer 23 is too thick. In this case, because the insulation layer 23 has certain hardness and brittleness, it may rupture under a flattening stress, and thus cannot support and protect well the positive current collector 21. In some embodiments, H is 50 µm to 100 µm.

Referring to FIGs. 3 and 4, along a winding direction Z of the electrode assembly 10, the positive current collector 21 includes a first end 211 and a second end 212 opposite to the first end 211. The insulation layer 23 on the first surface 21a or the second surface 21b is arranged from the first end 211 to the second end 212. In other words, in the winding direction Z of the electrode assembly 10, the insulation layer 23 overlaps all the first surface 21a or the second surface 21b of the positive current collector 21.

Referring to FIGs. 2 and 3, the negative electrode plate 30 includes a negative current collector 31 and a negative electrode active material layer 32 arranged on the negative current collector 31. The negative electrode active material layer 32 may be arranged on two surfaces opposite to each other or on only one surface of the negative current collector 31, which is not limited by this application. The negative current collector 31 includes an uncoated foil area 31a not covered by the negative electrode active material layer 32. The uncoated foil area 31a is used as a negative electrode tab and is connected to the housing. In some embodiments, the insulation layer 23 may also be arranged on the uncoated foil area 31a and cover a part of the uncoated foil area 31a to provide support for the negative current collector 31a. The insulation layer 23 may be arranged on the negative electrode plate 30 in the same manner as arranged on the positive electrode plate 20. Details are not further described now.

A material of the negative current collector 31 may include at least one of Ni, Ti, Cu, Ag, Au, Pt, Fe, Al, or combinations thereof. A material of the negative electrode active material layer 32 may be selected from at least one of a graphite material, an alloy material, a lithium metal, or a lithium alloy. The graphite material may be selected from at least one of artificial graphite or natural graphite. The alloy material may be selected from at least one of silicon, silicon oxide, tin, or titanium sulfide.

The separator 40 is configured to prevent the positive electrode plate 20 and the negative electrode plate 30 from direct contact, thereby reducing the risk of short circuit caused by the positive electrode plate 20 contacting the negative electrode plate 30. The separator 40 includes an insulating material selected from at least one of polypropylene, polyethylene, polyvinylidene fluoride, vinylidene fluoride-hexafluoropropylene copolymer, polymethylmethacrylate, or polyethylene glycol.

Some embodiments of this application also provide an electric apparatus including the cylindrical battery 100. Specifically, the electric apparatus refers to a mobile phone, a portable device, a notebook computer, an electric bicycle, an electric vehicle, a ship, a spacecraft, an electric toy, an electric tool, or the like. It can be understood that the electric apparatus is not limited thereto, but may alternatively be any electric device using the cylindrical battery 100.

The following will describe performance of the battery provided by this application in detail with reference to specific examples and comparative examples.

### Example 1

An electrode assembly 10 shown in FIG. 2 was mounted into a housing, and then a finished battery was obtained after electrolyte injection. Therein, a height L of a flattened part 101 was 0.2 mm, a height W of an insulation layer 23 was 2 mm, a thickness h of the insulation layer 23 was 40 µm, and a thickness H of an active material layer 22 was 50 µm.

A Hi-pot test (insulation internal resistance test) was performed on the finished battery made in Example 1 by applying a voltage of 250 V, lasting for 2 seconds, between positive and negative electrode tabs of the electrode assembly 10 and testing the resistance. If the resistance is ≥20MΩ (megohm), the Hi-pot test was considered to be passed. If the resistance <20MΩ (megohm), the Hi-pot test was considered to fail, and the battery was a Hi-pot-defective product.

### Comparative Example 1

A finished battery approximately the same as that in Example 1 was made, with the difference that no insulation layer 23 was provided on a positive current collector 21 and an uncoated foil area 24 was directly connected to an active material layer 22.

Examples 2 to 8 differ from Example 1 in the height L of the flattened part 101.

Specific parameters and Hi-pot test results of Examples 1 to 8 and Comparative Example 1 are shown in Table 1.

**Table 1**

| | L/mm | W/mm | h/µm | H/µm | Hi-pot test pass rate |
|---|---|---|---|---|---|
| Example 1 | 0.2 | 2 | 40 | 50 | 20/20 |
| Example 2 | 0.6 | 2 | 40 | 50 | 20/20 |
| Example 3 | 1 | 2 | 40 | 50 | 20/20 |
| Example 4 | 2 | 2 | 40 | 50 | 20/20 |
| Example 5 | 3 | 2 | 40 | 50 | 20/20 |
| Example 6 | 4 | 2 | 40 | 50 | 20/20 |
| Example 7 | 0.15 | 2 | 40 | 50 | 18/20 |
| Example 8 | 5 | 2 | 40 | 50 | 20/20 |
| Comparative Example 1 | 2.2 | -- | -- | 50 | 10/20 |

| | | | | | |
|---|---|---|---|---|---|
| Note: X/20 indicates that X batteries out of 20 samples tested passed the Hi-pot test. | | | | | |

In Example 1 and Comparative Example 1, the same flattening process was employed to flatten the uncoated foil area 24 to make the flattened part 101. Because no insulation layer 23 is arranged on the positive current collector 21 in Comparative Example 1, during flattening, the uncoated foil area 24 in Comparative Example 1 is more likely to fold over and come into contact with the negative electrode active layer, resulting in a short circuit and thereby causing the Hi-pot test to fail. According to Example 1 and Comparative Example 1, arranging the insulation layer 23 greatly increases the Hi-pot test pass rate and reduces the risk of short circuit.

According to Examples 1 to 8, when the height L of the flattened part 101 is 0.2 mm to 4 mm, the Hi-pot test pass rate is 100%. When the height L of the flattened part 101 is less than 0.2 mm, a stacked area of the flattened part 101 is severely compressing the insulation layer 23 and may cause the insulation layer 23 to rupture, leading to a low Hi-pot test pass rate. When the height L of the flattened part 101 is greater than 4 mm, although the Hi-pot test pass rate is 100%, energy density loss is relatively high.

Examples 9 to 14 differ from Example 2 in the height W of the insulation layer 23. Specific parameters and Hi-pot test results are shown in Table 2.

**Table 2**

| | L/mm | W/mm | h/µm | H/µm | Hi-pot test pass rate |
|---|---|---|---|---|---|
| Example 2 | 0.6 | 2 | 40 | 50 | 20/20 |
| Example 9 | 0.6 | 1.2 | 40 | 50 | 16/20 |
| Example 10 | 0.6 | 1.5 | 40 | 50 | 20/20 |
| Example 11 | 0.6 | 3 | 40 | 50 | 20/20 |
| Example 12 | 0.6 | 5 | 40 | 50 | 20/20 |
| Example 13 | 0.6 | 0.8 | 40 | 50 | 13/20 |
| Example 14 | 0.6 | 5.5 | 40 | 50 | 20/20 |

According to Table 2, when the height W of the insulation layer 23 is 1 mm to 5 mm, the Hi-pot test pass rate is relatively high; when the height W of the insulation layer 23 is 1.5 mm to 5 mm, the Hi-pot test pass rate is 100%. When W is less than 1 mm, application of the insulation layer 23 may be incomplete due to unstable capability of a coating process, reducing the Hi-pot test pass rate. When W is greater than 5 mm which is over-large, although the Hi-pot test pass rate is 100%, volumetric energy density loss of the battery is relatively high because more space is occupied.

Examples 15 to 21 differ from Example 2 in the ratio of the thickness h of the insulation layer 23 to the thickness H of the active material layer 22. Specific parameters and Hi-pot test results are shown in Table 3.

**Table 3**

| | L/mm | W/mm | h/µm | H/µm | h/H ratio | Hi-pot test pass rate |
|---|---|---|---|---|---|---|
| Example 2 | 0.6 | 2 | 40 | 50 | 0.8 | 20/20 |
| Example 15 | 0.6 | 2 | 20 | 50 | 0.4 | 20/20 |
| Example 16 | 0.6 | 2 | 10 | 50 | 0.2 | 20/20 |
| Example 17 | 0.6 | 2 | 30 | 50 | 0.6 | 20/20 |
| Example 18 | 0.6 | 2 | 45 | 50 | 0.9 | 20/20 |
| Example 19 | 0.6 | 2 | 5 | 50 | 0.1 | 15/20 |
| Example 20 | 0.6 | 2 | 4 | 50 | 0.08 | 13/20 |
| Example 21 | 0.6 | 2 | 50 | 50 | 1 | 17/20 |

According to Table 3, when 0.1H≤h≤H, the Hi-pot test pass rate is relatively high and within an acceptable range; when 0.2H≤h≤0.9H, the Hi-pot test pass rate reaches 100%. When h<0.1H, the insulation layer 23 is too thin and its application may be incomplete due to unstable capability of the coating process, reducing the Hi-pot test pass rate; when h>0.9H, the insulation layer 23 is too thick and may rupture under a flattening stress, reducing the Hi-pot test pass rate.

The descriptions disclosed above are only some preferred embodiments of this application, and certainly do not constitute limitation on this application. Accordingly, any equivalent changes made in accordance with this application still fall within the scope of this application.

## Claims

1. A cylindrical battery comprising an electrode assembly, the electrode assembly comprising a positive electrode plate, a separator, and a negative electrode plate stacked and wound together, wherein:
the positive electrode plate comprises a positive current collector, the positive current collector having a first surface provided with an active material layer, an insulation layer, and an uncoated foil area, wherein the active material layer, the insulation layer, and the uncoated foil area are arranged in order along an axial direction of the cylindrical battery; and
the electrode assembly further comprises a flattened part, the flattened part being formed by bending and overlapping the uncoated foil area towards a central axis of winding of the electrode assembly and having a flattened surface.

2. The cylindrical battery according to claim 1, wherein along the axial direction of the cylindrical battery, a height L of the flattened part is 0.2 mm to 4 mm.

3. The cylindrical battery according to claim 1, wherein along the axial direction of the battery, a height W of the insulation layer is 1 mm to 5 mm.

4. The cylindrical battery according to claim 3, wherein the height W of the insulation layer is 1.5 mm to 5 mm.

5. The cylindrical battery according to claim 4, wherein the height W of the insulation layer is 1.5 mm to 3 mm.

6. The cylindrical battery according to claim 1, wherein the insulation layer has a thickness h, and the active material layer has a thickness H, 0.1H≤h≤H.

7. The cylindrical battery according to claim 6, wherein 0.2H≤h≤0.9H.

8. The cylindrical battery according to claim 6 or 7, wherein H is 50 µm to 100 µm.

9. The cylindrical battery according to claim 6 or 7, wherein h is 10 µm to 45 µm.

10. The cylindrical battery according to claim 1, wherein the positive current collector further comprises a second surface opposite to the first surface, and the active material layer, the insulation layer, and the uncoated foil area are also arranged on the second surface.

11. The cylindrical battery according to claim 1, wherein the insulation layer comprises inorganic particles, the inorganic particles comprising at least one of aluminum oxide, zinc oxide, calcium oxide, silicon dioxide, zirconium oxide, magnesium oxide, titanium oxide, hafnium dioxide, tin oxide, cerium dioxide, nickel oxide, yttrium oxide, silicon carbide, alumina hydroxide, magnesium hydroxide, calcium hydroxide, barium sulfate, or boehmite.

12. An electric apparatus, comprising the cylindrical battery according to any one of claims 1 to 11.
